# EUROPÄISCHE PATENTSCHRIFT

(11) **EP 3 577 741 B1**
(45) Veröffentlichungstag und Bekanntmachung des Hinweises auf die Patenterteilung: **03.08.2022**
(21) Anmeldenummer: 18712180.1
(22) Anmeldetag: 16.03.2018
(51) Int. Cl.: H02K 1/17, H02K 1/27

(54) **MAGNETELEMENTHALTEVORRICHTUNG**
MAGNETIC ELEMENT HOLDING DEVICE
DISPOSITIF DE RETENUE D'ÉLÉMENT MAGNÉTIQUE

(30) Priorität: 03.05.2017 DE 102017109494
(43) Veröffentlichungstag der Anmeldung: 11.12.2019
(73) Patentinhaber: ebm-papst Mulfingen GmbH & Co. KG, 74673 Mulfingen (DE)
(72) Erfinder: MASCHKE, Matthias, 74635 Kupferzell (DE); SCHAFFERT, Friedrich, 74575 Schrozberg (DE); HOSS, Sebastian, 97980 Bad Mergentheim (DE); SCHMIDT, Tobias, 74744 Ahorn-Schillingstadt (DE)
(74) Vertreter: Staeger & Sperling Partnerschaftsgesellschaft mbB
(86) Internationale Anmeldenummer: PCT/EP2018/056681
(87) Internationale Veröffentlichungsnummer: WO 2018/202352

(56) Entgegenhaltungen:
- DE-B- 1 082 665
- JP-U- S5 068 807
- JP-U- S5 686 883
- JP-U- S5 944 170
- US-A- 2 513 227

## Beschreibung

Die Erfindung betrifft eine Magnetelementhaltevorrichtung eines Elektromotors sowie einen Rotor eines Elektromotors mit mindestens einer Magnetelementhaltevorrichtung.

Bei der Positionierung und Befestigung von Magneten im Rotor von Elektromotoren sind verschiedene Lösungen üblich. Beispielsweise werden bei Außenläufermotoren die Magnete häufig an der Innenwand des Rotors verklebt. Hierbei ist jedoch der Montageaufwand hoch. Zudem sind Fehler bei der Positionierung und Auswahl der Permanentmagnetelemente nicht ausgeschlossen, die zu einer unkorrekten Orientierung der einzelnen Magnetelemente führt. Ein einmal falsch verklebtes Magnetelement kann nur durch erhöhten Aufwand wieder korrigiert werden.

Der Erfindung liegt deshalb die Aufgabe zugrunde, eine Magnetelementhaltevorrichtung bereitzustellen, die eine Vorabmontage der Magnetelemente ermöglicht, die als Ganzes an dem Rotor befestigbar ist. Die Magnetelementhaltevorrichtung soll dabei in dem Rotor positionsfest festlegbar sein.

Druckschriftlicher Stand der Technik im vorliegenden technischen Gebiet ist beispielsweise offenbart in den Dokumenten JP S56 86883U, JP S50 68807 U, DE 10 82 665 B, US 2,513,277 A und JP S59 44170 U.

Diese Aufgabe wird durch die Merkmalskombination gemäß Patentanspruch 1 gelöst.

Erfindungsgemäß wird eine Magnetelementhaltevorrichtung mit einem Träger gebildet aus einer Rahmenkonstruktion vorgeschlagen, wobei der Träger mindestens einen Aufnahmeabschnitt zur Aufnahme mindestens eines Magnetelements aufweist. Die Magnetelementhaltevorrichtung umfasst zudem Haltemittel zum positionsfesten Halten des mindestens einen Magnetelements innerhalb des mindestens einen Aufnahmeabschnitts.

Die Magnetelementhaltevorrichtung umfasst erfindungsgemäß zudem außenrandseitig mindestens ein Federelement, über welches eine Vorspannung gegenüber einer außenrandseitig angrenzend positionierten Magnetelementhaltevorrichtung erzeugbar ist.

Die Magnetelemente können in den Aufnahmeabschnitt der Magnetelementhaltevorrichtung eingeschoben und dort über die Haltemittel fixiert werden. Es ist somit möglich, das oder die Magnetelemente außerhalb des Rotors in der Magnetelementhaltevorrichtung zu montieren und betriebsfertig mit korrekter Orientierung vorzubereiten. Über das außenrandseitige Federelement kann die Magnetelementhaltevorrichtung gegenüber einer weiteren angrenzend positionierten Magnetelementhaltevorrichtung vorgespannt werden, so dass die Positionierung zueinander festlegbar ist. Zudem kann über das Federelement die Magnetelementhaltevorrichtung gegen die Innenwand des Rotors verspannt werden, wenn mehrere Magnetelementhaltevorrichtungen miteinander verbunden an die Innenwand des Rotors gesetzt werden.

Das Federelement fördert durch Erzeugung der Vorspannung auch die korrekte Endpositionierung der Magnetelementhaltevorrichtung innerhalb des Rotors bei der Montage und während des Betriebs.

In einer vorteilhaften Ausführungsvariante ist die Magnetelementhaltevorrichtung als modulare Einheit ausgebildet. Mehrere entsprechende Module können miteinander verbunden und aneinander befestigt werden, wobei die außenrandseitig angeordneten Federelemente dann zwischen den einzelnen Modulen verlaufen und diese gegeneinander vorspannen. Aus einzelnen Modulen kann ein Ring aus Magnetelementhaltevorrichtungen erzeugt werden, der in den Rotor, vorzugsweise an dessen umlaufende Innenwand einsetzbar ist.

Ein Ausführungsbeispiel der Magnetelementhaltevorrichtung sieht vor, dass der Aufnahmeabschnitt mehrere zueinander in einer axialen Reihe angeordnete Aufnahmetaschen aufweist, die ausgebildet sind, jeweils ein Magnetelement aufzunehmen. In Abhängigkeit der Größe des Rotors und Leistung des Elektromotors können somit mehrere Magnetelemente in jeder einzelnen Magnetelementhaltevorrichtung verbaut werden, wobei die einzelnen Magnetelemente in einer axialen Reihe in jeweils zugeordneten Aufnahmeabschnitten positioniert und fixiert sind.

Als erfindungsgemäße Ausführung der Magnetelementhaltevorrichtung ist vorgesehen, dass sie mehrere parallele Reihenabschnitte mit jeweils mindestens einem Aufnahmeabschnitt für jeweils mindestens ein Magnetelement aufweist, wobei die Reihenabschnitte zueinander beabstandet sind. Diese Lösung richtet sich darauf, dass die Magnetelementhaltevorrichtung mehrreihig ausgebildet wird, wobei jeder Reihenabschnitt einen Umfangsabschnitt im Rotor besetzen soll. Die zueinander beabstandete Anordnung der Reihenabschnitt erfolgt deshalb in einer Richtung, welche der Umfangsrichtung im Rotor entspricht. Jeder Reihenabschnitt weist mindestens ein Magnetelement auf, jedoch kann jeder Reihenabschnitt als alternative Ausführung mehrere der vorstehend beschriebenen, in axialer Reihe angeordneten Aufnahmetaschen aufweisen.

Bei einer Ausführung der Magnetelementhaltevorrichtung mit Reihenabschnitten wird in einer Weiterbildung vorgesehen, dass die Reihenabschnitte jeweils über das mindestens eine Federelement miteinander verbunden sind.

Erfindungsgemäß ist vorgesehen, dass zwischen den Reihenabschnitten jeweils ein Scharnier angeordnet oder ausgebildet ist, über welches die Reihenabschnitte zueinander beweglich neigbar sind. Über diese Neigung kann die Ausrichtung der einzelnen Reihenabschnitte in Umfangsrichtung innerhalb des Rotors erfolgen.

Die Haltemittel zum positionsfesten Halten des jeweiligen Magnetelements in dem jeweiligen Aufnahmeabschnitt der Magnetelementhaltevorrichtung sind in einer Ausführungsvariante jeweils als Klipsverrastung ausgebildet, in die das jeweilige Magnetelement einschiebbar und arretierbar ist. Die korrekte Position kann über einen Anschlag an der Verrastung und ein Fixiermittel, beispielsweise eine Klipse erzeugt werden.

In einer günstigen Ausführung wird bei der Magnetelementhaltevorrichtung vorgesehen, dass das Federelement einteilig daran ausgebildet ist. Ferner ist eine Ausführung vorteilhaft, bei der das Federelement im Querschnitt zumindest abschnittsweise eine Wellenform aufweist, die zumindest entlang ihres Wellenfließverlaufs teilelastisch stauchbar und dehnbar ist. Als Federelement kann hierzu ein Blechprofil, bei einer Lösung aus Kunststoff ein entsprechend gewellter Flügel verwendet werden. Zudem können bei dem Federelement Nuten mit einem zur Stauchrichtung (eine Richtung, die sich zwischen benachbarten Magnethaltevorrichtungen erstreckt) senkrechten Verlauf zur Erhöhung Beweglichkeit und Elastizität vorgesehen werden.

Ferner ist eine Ausführung günstig, bei der sich das Federelement im Wesentlichen über eine gesamte Randseitenlänge der Magnetelementhaltevorrichtung erstreckt. Die Randseitenlänge entspricht dabei im Wesentlichen der Axiallänge des Innenraums des Rotors, in den die Magnetelementhaltevorrichtung eingesetzt wird. Durch die Erstreckung des Federelements wird eine konstante Vorspannung über die gesamte axiale Länge der Magnetelementhaltevorrichtungen zueinander und mithin die korrekte Ausrichtung gewährleistet.

Eine Weiterbildung der Magnetelementhaltevorrichtung ist gekennzeichnet durch eine stirnseitig angeordnete Zunge, welche in ihrer Position bewegbar oder biegbar ist, wobei über die Zunge der stirnseitig angrenzende Aufnahmeabschnitt verschließbar ist.

Ferner wird in einer Ausführungsvariante an der Magnetelementhaltevorrichtung ein Magnetelementeinschubabschnitt vorgesehen, über den das/die Magnetelement(e) in den/die Aufnahmeabschnitt(e) einführbar ist/sind. Der Magnetelementeinschubabschnitt bildet den stirnseitigen Aufnahmeabschnitt, wobei er, nachdem alle Magnetelemente in die Magnethaltevorrichtung eingeschoben sind, über die Zunge verschließbar ist. Der Magnetelementeinschubabschnitt weist in einem Ausführungsbeispiel zudem stirnseitig einen asymmetrischen Querschnitt auf. Hierdurch kann eine konstruktive Magnetfeldorientierung und mithin eine korrekte Zuführung der Permanentmagnetelemente in die jeweilige Magnethaltevorrichtung gewährleistet werden.

Alternativ oder zusätzlich ist in einer Weiterbildung der Magnetelementhaltevorrichtung vorgesehen, dass die Zunge einen optischen Indikator (z.B. +, -) für die Magnetfeldorientierung des Magnetelements aufweist.

Die Erfindung umfasst ferner den Rotor eines Elektromotors mit einer Vielzahl von vorstehend beschriebenen Magnetelementhaltevorrichtungen, wobei die Vielzahl der Magnetelementhaltevorrichtungen in Umfangsrichtung aneinander angrenzend an einer Innenwand des Rotors angeordnet und miteinander befestigt ist.

Zur Fixierung der Vielzahl der Magnetelementhaltevorrichtungen wird diese in einem Ausführungsbeispiel an der Innenwand des Rotors zumindest stellenweise verklebt. Da die gesamte Magnetelementhaltevorrichtung und nicht einzelne Magnetelemente verklebt werden, ist die Positionierung der Magnetelemente leichter herstellbar und sichergestellt.

In einer vorteilhaften Variante wird die Vielzahl der Magnetelementhaltevorrichtungen in einer Umfangsrichtung zu einer Kreiseinheit verbunden und als Ganzes entlang der Innenwand in den Rotor eingeschoben. Die Montage kann mithin vollständig außerhalb des Rotors und vorab erfolgen. Die Kreiseinheit kann in Umfangsrichtung gegen die Federelemente vorgespannt in den Rotor eingesetzt werden, wodurch eine Vorspannungskraft auf die Innenwand des Rotors ausübbar ist.

Zwischen jeder der Magnetelementhaltevorrichtungen kann jeweils ein Federelement angeordnet sein. Die Zuführung der Kreiseinheit als Ganzes mit den zueinander über die Federelemente vorgespannten Magnetelementhaltevorrichtungen erfolgt in einem einzigen Schritt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine nicht-erfindungsgemäße Magnetelementhaltevorrichtung in einer einreihigen Ausführungsvariante;
- Fig. 2: eine Magnetelementhaltevorrichtung in einer mehrreihigen Ausführungsvariante;
- Fig. 3: einen Rotor mit einer Vielzahl von eingesetzten Magnetelementhaltevorrichtungen der einreihigen Ausführungsvariante in einer perspektivischen Ansicht;
- Fig. 4: den Rotor aus Figur 3 in einer Draufsicht und mit einer Detailansicht A;
- Fig. 5: einen Rotor mit einer Vielzahl von eingesetzten Magnetelementhaltevorrichtungen der mehrreihigen Ausführungsvariante in einer perspektivischen Ansicht.

Gleiche Bezugszeichen benennen gleiche Teile in allen Ansichten.

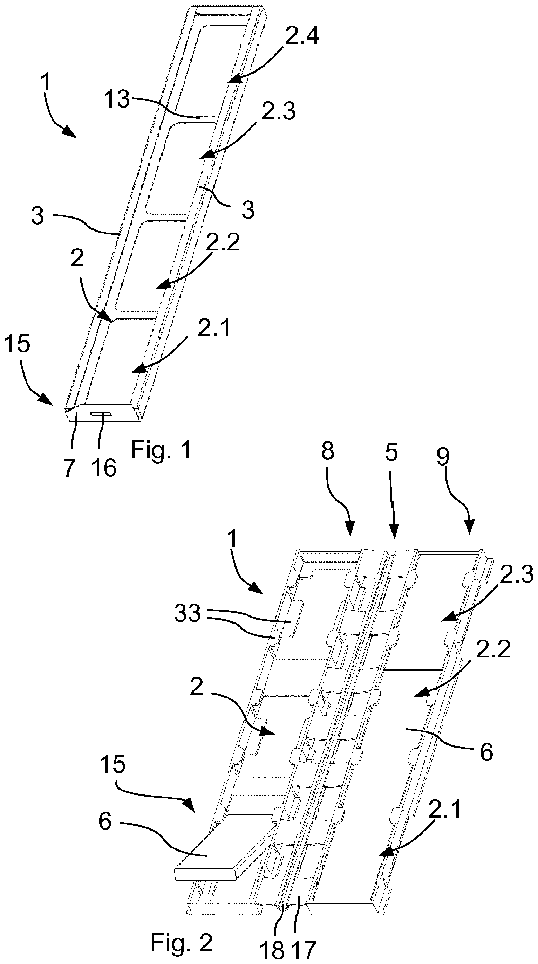

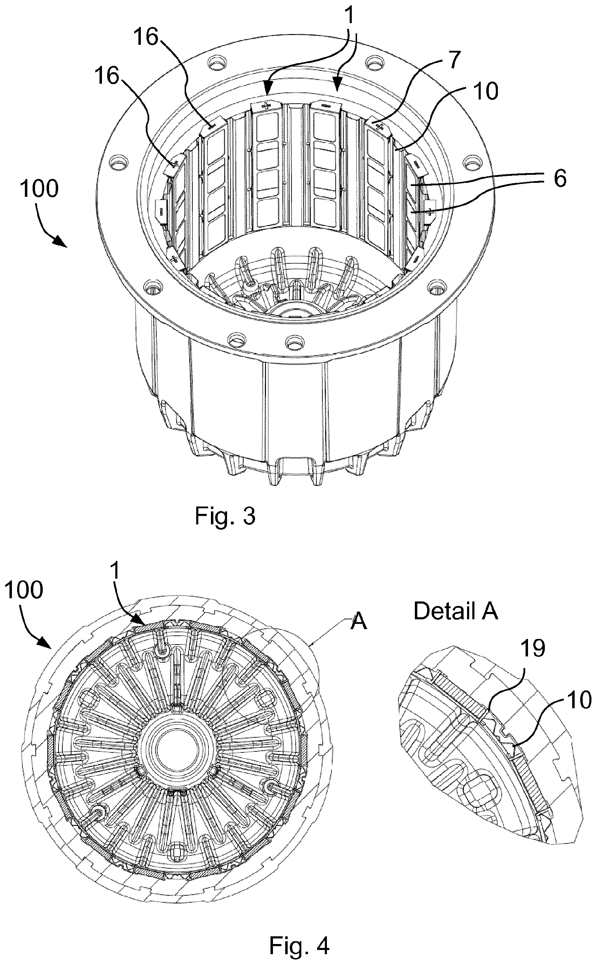

In Figur 1 ist eine modular ausgebildete Magnetelementhaltevorrichtung 1 zum Einsatz in einem Rotor, insbesondere Außenläuferrotor eines Elektromotors in einer perspektivischen Ansicht gezeigt. Die Magnethaltevorrichtung 1 wird durch einen aus einer Rahmenkonstruktion gebildeten Träger realisiert und weist einen Aufnahmeabschnitt 2 zur Aufnahme von Magnetelementen 6 (siehe Figur 3) auf. Der Aufnahmeabschnitt 2 umfasst in der gezeigten Variante vier zueinander in einer axialen Reihe angeordnete Aufnahmetaschen 2.1, 2.2, 2.3, 2.4, die jeweils ein Magnetelement 6 aufnehmen können. Aus Gründen der Übersichtlichkeit sind die Magnetelemente 6 in Figur 1 nicht gezeigt. Jede Aufnahmetasche 2.1, 2.2, 2.3, 2.4 ist durch Stege 13 getrennt, im Übrigen sind die Seitenflächen jedoch frei, so dass die Magnetelemente 6 von der Magnetelementhaltevorrichtung 1 unbedeckt bleiben und ihre volle Wirkung entfalten.

An der Rahmenkonstruktion der Magnetelementhaltevorrichtung 1 sind durch umgreifende Haltestege 3 gebildete Haltemittel vorgesehen, welche die Magnetelemente 6 positionsfest innerhalb der Aufnahmetaschen 2.1, 2.2, 2.3, 2.4 des Aufnahmeabschnitts 2 arretieren.

Auf einer der Stirnseiten der Magnetelementhaltevorrichtung 1 ist ein Magnetelementeinschubabschnitt 15 vorgesehen, dessen stirnseitiger Randabschnitt von der Rahmenkonstruktion offen ausgebildet ist, so dass die Magnetelemente 6 stirnseitig nacheinander eingeschoben werden können. Die axiale Länge des Aufnahmeabschnitts 2 entspricht derjenigen von vier standardgroßen Magnetelementen 6. Über eine an der Stirnseite angeordnete Zunge 7 kann der Magnetelementeinschubabschnitt 15 und mithin die Magnetelementhaltevorrichtung 1 verschlossen werden. Die Zunge 7 ist hierfür um eine Randachse biegbar. Figur 1 zeigt den verschlossenen Zustand der Zunge 7. Ferner weist die Zunge 7 einen optischen Indikator 16 (gezeigt ist ein Minus (-)) für die Magnetfeldorientierung der Magnetelemente 6 in der Magnetelementhaltevorrichtung 1 auf.

Der Einsatz der Magnetelementhaltevorrichtung 1 aus Figur 1 ist in Figur 3 dargestellt, wobei eine Vielzahl der Magnetelementhaltevorrichtungen 1 in Umfangsrichtung aneinander angrenzend an einer Innenwand eines Rotors 100 angeordnet, miteinander befestigt und an der Innenwand des Rotors 100 beispielsweise verklebt ist. Die Vielzahl der Magnetelementhaltevorrichtungen 1 ist in Umfangsrichtung zu einer Kreiseinheit verbunden und als Ganzes entlang der Innenwand in den Rotor 100 hinein geschoben. Zwischen jeweils zwei benachbarten Magnetelementhaltevorrichtungen 1 sind jeweils Federelemente 10 angeordnet, die die einzelnen Magnetelementhaltevorrichtungen 1 zueinander in eine Vorspannung versetzen. Die Federelemente 10 können dabei einteiliger oder einstückiger Bestandteil jeweils einer Magnetelementhaltevorrichtung 1 sein oder als Zusatzbauteil daran befestigt werden. Jedes der Federelemente 10 erstreckt sich über die komplette axiale Randseitenlänge der jeweiligen Magnetelementhaltevorrichtung 1, wobei die gemeinte Randseite parallel zur Achse des Rotors 100 verläuft.

In der Draufsicht und der zugehörigen Detailansicht A in Figur 4 ist gut zu erkennen, dass die Federelemente 10 jeweils im Querschnitt abschnittsweise eine Wellenform aufweisen. Die Federelemente 10 sind zumindest entlang ihres Wellenfließverlaufs, d.h. der Erstreckung zwischen zwei angrenzenden Magnetelementhaltevorrichtungen 1, zumindest teilelastisch stauchbar und dehnbar, beispielsweise durch Bildung aus einem Blechteil.

Der Magnetelementeinschubabschnitt 15 der jeweiligen Magnetelementhaltevorrichtungen 1 ist in der gezeigten Ausführung der nach oben in Richtung Rotoröffnung weisende Abschnitt und weist stirnseitig einen asymmetrischen Querschnitt 19 auf, um eine konstruktive Lösung zur Bestimmung der Magnetfeldorientierung bereitzustellen.

In Figur 2 ist eine alternative Lösung einer Magnetelementhaltevorrichtung 1 in einer zweireihigen Ausführung offenbart. Hierbei ist vorgesehen, dass die Magnetelementhaltevorrichtung 1 mehrere, in der gezeigten Ausführung zwei parallele Reihenabschnitte 8, 9 mit jeweils einem Aufnahmeabschnitt 2 für die Aufnahme von jeweils drei Magnetelementen 6 aufweist. Die Reihenabschnitte 8, 9 sind in einer zur Axialrichtung senkrechten Querrichtung zueinander beabstandet, wobei zwischen den beiden Reihenabschnitten 8, 9 ein Scharnier 5 vorgesehen ist, über das die beiden Reihenabschnitte 8, 9 zueinander beweglich neigbar sind. Das Scharnier 5 wird gebildet durch eine Vielzahl von beidseitig aufeinander zuweisenden Verbindungsschenkeln 17 und einen sich zwischen den Verbindungsschenkeln 17 in Axialrichtung erstreckenden und diese verbindenden Kanal 18, der zumindest teilelastisch ausgebildet ist und die Neigbarkeit der beiden Reihenabschnitte 8, 9 gewährleistet.

An der Rahmenkonstruktion der Magnetelementhaltevorrichtung 1 gemäß Figur 2 sind vorstehende Haltestege 33 als Haltemittel vorgesehen, welche drei Magnetelemente 6 positionsfest innerhalb von drei Aufnahmetaschen 2.1, 2.2, 2.3 des Aufnahmeabschnitts 2 gegen Herausfallen arretieren. Nicht gezeigt, jedoch vorsehbar ist ferner eine Klipsverrastung, mittel der die Magnetelemente an einer vorbestimmten Position innerhalb der Aufnahmetaschen verrasten und somit in dem Aufnahmeabschnitt fixiert werden. In der gezeigten Ausführung ist der rechtsseitige Reihenabschnitt 9 mit drei Magnetelementen 6 vollständig befüllt, beim linksseitigen Reihenabschnitt 8 wird das Einführen des ersten von drei Magnetelementen 6 in den Magnetelementeinschubabschnitt 15 durch gekipptes Einsetzen angedeutet. Vollständig befüllt entspricht der Reihenabschnitt 8 dem Reihenabschnitt 9.

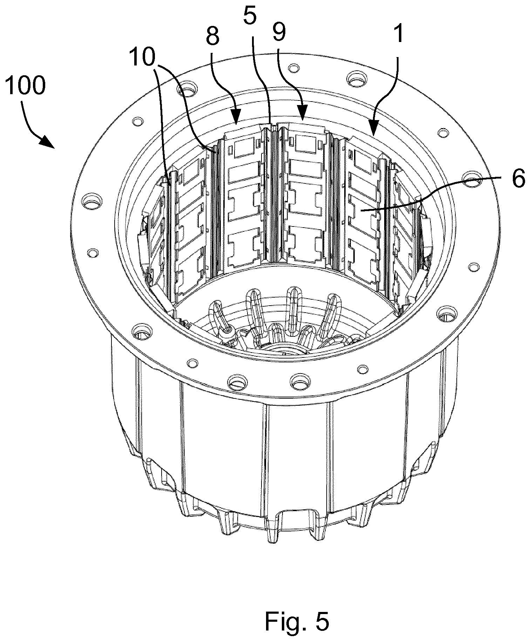

Der Einsatz der als modulare Einheit ausgebildeten Magnetelementhaltevorrichtung 1 aus Figur 2 ist in Figur 5 dargestellt, wobei eine Vielzahl der Magnetelementhaltevorrichtungen 1 in Umfangsrichtung aneinander angrenzend an einer Innenwand eines Rotors 100 angeordnet, miteinander befestigt und an der Innenwand des Rotors 100 verklebt ist. Wie in der Ausführung gemäß Figur 1 und 3 ist die Vielzahl der mehrreihigen Magnetelementhaltevorrichtungen 1 in Umfangsrichtung zu einer Kreiseinheit verbunden und als Ganzes entlang der Innenwand in den Rotor 100 hinein geschoben. Zwischen jeweils zwei benachbarten Magnetelementhaltevorrichtungen 1 und zwischen jeder der Reihenabschnitte 8, 9 ist jeweils ein Federelement 10 angeordnet, das die einzelnen Magnetelementhaltevorrichtungen 1 und die Reihenabschnitte 8, 9 gegeneinander in eine Vorspannung versetzen. Die Federelemente 10 können dabei einteiliger oder einstückiger Bestandteil jeweils einer Magnetelementhaltevorrichtung 1 oder eines Reihenabschnitts 8, 9 sein oder als Zusatzbauteil an der Magnetelementhaltevorrichtung 1 oder den einzelnen Reihenabschnitte 8,9 befestigt werden. Jedes der Federelemente 10 erstreckt sich über die komplette axiale Randseitenlänge der jeweiligen Magnetelementhaltevorrichtung 1. Als Federelemente 10 kommen solche entsprechend der Ausführung gemäß Figur 3 zum Einsatz, so dass bezüglich deren Beschreibung auf vorstehende Offenbarung verwiesen wird.

Die Anzahl der Magnetelemente 6 ist frei wählbar, da jede der offenbarten Magnetelementhaltevorrichtungen 1 in ihrer Größe entsprechend anpassbar ist. Als Material für die Magnetelementhaltevorrichtung 1 beispielsweise Blech oder Kunststoff zum Einsatz. Zudem ist die mehrreihige Ausbildung der Magnetelementhaltevorrichtung 1 nicht auf zwei Reihenabschnitte beschränkt.

## Patentansprüche

1. Magnetelementhaltevorrichtung (1) für einen Elektromotor aufweisend einen Träger gebildet aus einer Rahmenkonstruktion, der mindestens einen Aufnahmeabschnitt (2) zur Aufnahme mindestens eines Magnetelements (6) aufweist, und mit Haltemitteln zum positionsfesten Halten des mindestens einen Magnetelements (6) innerhalb des mindestens einen Aufnahmeabschnitts (2), wobei die Magnetelementhaltevorrichtung (1) ausgebildet ist, im bestimmungsgemäßen Gebrauch an einer Innenwand eines Rotors des Elektromotors befestigt zu werden, wobei die Magnetelementhaltevorrichtung (1) außenrandseitig mindestens ein Federelement (10) aufweist, über welches eine Vorspannung gegenüber einer außenrandseitig in Umfangsrichtung des Rotors angrenzend positionierbaren zweiten Magnetelementhaltevorrichtung (1) erzeugbar ist, **dadurch gekennzeichnet, dass** die Magnetelementhaltevorrichtung (1) in Umfangsrichtung des Rotors mehrere parallele Reihenabschnitte (8, 9) mit jeweils mindestens einem Aufnahmeabschnitt (2) für jeweils mindestens ein Magnetelement (6) aufweist, wobei die Reihenabschnitte (8, 9) in Umfangsrichtung des Rotors zueinander beabstandet sind, und wobei zwischen den Reihenabschnitten (8, 9) jeweils ein Scharnier (5) vorgesehen ist, über welches die Reihenabschnitte (8, 9) zueinander beweglich neigbar sind.

2. Magnetelementhaltevorrichtung nach Anspruch 1, **dadurch gekennzeichnet, dass** sie als modulare Einheit ausgebildet ist.

3. Magnetelementhaltevorrichtung nach Anspruch 1 oder 2, **dadurch gekennzeichnet, dass** der Aufnahmeabschnitt (2) mehrere zueinander in einer axialen Reihe angeordnete Aufnahmetaschen (2.1, 2.2, 2.3) aufweist, die ausgebildet sind, jeweils ein Magnetelement (6) aufzunehmen.

4. Magnetelementhaltevorrichtung nach Anspruch 1, **dadurch gekennzeichnet, dass** die Reihenabschnitte (8, 9) jeweils über das mindestens eine Federelement (10) miteinander verbunden sind.

5. Magnetelementhaltevorrichtung nach einem der vorigen Ansprüche, **dadurch gekennzeichnet, dass** die Haltemittel zum positionsfesten Halten des mindestens einen Magnetelements (6) jeweils als Klipsverrastung ausgebildet sind, in welche das Magnetelement (6) einschiebbar und arretierbar ist.

6. Magnetelementhaltevorrichtung nach einem der vorigen Ansprüche, **dadurch gekennzeichnet, dass** das Federelement (10) einteilig an der Magnetelementhaltevorrichtung (1) ausgebildet ist.

7. Magnetelementhaltevorrichtung nach einem der vorigen Ansprüche, **dadurch gekennzeichnet, dass** das Federelement (10) im Querschnitt zumindest abschnittsweise eine Wellenform aufweist, die zumindest entlang ihres Wellenfließverlaufs teilelastisch stauchbar und dehnbar ist.

8. Magnetelementhaltevorrichtung nach einem der vorigen Ansprüche, **dadurch gekennzeichnet, dass** sich das Federelement (10) im Wesentlichen über eine gesamte Randseitenlänge der Magnetelementhaltevorrichtung (1) erstreckt.

9. Magnetelementhaltevorrichtung nach einem der vorigen Ansprüche, **gekennzeichnet durch** eine stirnseitig angeordnete Zunge (7), welche in ihrer Position bewegbar oder biegbar ist, wobei über die Zunge (7) der mindestens einen Aufnahmeabschnitt (2.1) verschließbar ist.

10. Magnetelementhaltevorrichtung nach dem vorigen Anspruch, **dadurch gekennzeichnet, dass** die Zunge (7) einen optischen Indikator (16) für eine Magnetfeldorientierung des mindestens einen Magnetelements (6) aufweist.

11. Magnetelementhaltevorrichtung nach einem der vorigen Ansprüche, **dadurch gekennzeichnet, dass** ein Magnetelementeinschubabschnitt (15) vorgesehen ist, über den das mindestens eine Magnetelement (66) in den mindestens einen Aufnahmeabschnitt (2.1) einführbar ist, wobei der Magnetelementeinschubabschnitt (15) stirnseitig einen asymmetrischen Querschnitt aufweist.

12. Rotor (100) eines Elektromotors mit einer Vielzahl von Magnetelementhaltevorrichtungen (1) nach einem der vorigen Ansprüche, **dadurch gekennzeichnet, dass** die Vielzahl der Magnetelementhaltevorrichtungen (1) in Umfangsrichtung aneinander angrenzend an der Innenwand des Rotors (100) angeordnet und miteinander befestigt ist.

13. Rotor nach dem vorigen Anspruch, **dadurch gekennzeichnet, dass** die Vielzahl der Magnetelementhaltevorrichtungen (1) an der Innenwand des Rotors (100) zumindest stellenweise verklebt ist.

14. Rotor nach dem vorigen Anspruch, **dadurch gekennzeichnet, dass** die Vielzahl der Magnetelementhaltevorrichtungen (1) in einer Umfangsrichtung zu einer Kreiseinheit verbindbar und als Ganzes entlang der Innenwand in den Rotor (100) einschiebbar ist.

15. Rotor nach einem der Ansprüche 12 bis 14, **dadurch gekennzeichnet, dass** zwischen jeder der Magnetelementhaltevorrichtungen (1) jeweils ein Federelement (10) angeordnet ist.

## Claims

1. A magnetic element holder (1) for an electric motor, comprising a carrier formed of a frame structure, which carrier comprises at least one receiving section (2) for receiving at least one magnetic element (6) and is configured with holding means for positionally fixed holding of the at least one magnetic element (6) inside the at least one receiving section (2), wherein the magnetic element holder (1) is configured to be fastened to an inner wall of a rotor of an electric motor when used as intended, wherein the magnetic element holder (1) has at least one spring element (10) on its outer edge, by means of which a bias can be generated with respect to a second magnetic element holder (1) adjacently positionable on the outer edge in a circumferential direction of the rotor, **characterized in that** the magnetic element holder (1) in the circumferential direction of the rotor comprises multiple parallel row sections (8, 9), each having at least one receiving section (2) for at least one magnetic element (6), wherein the row sections (8, 9) are spaced apart from each other in the circumferential direction of the rotor, and wherein a hinge (5) is provided between the row sections (8, 9), respectively, by means of which the row sections (8, 9) can be movably inclined relative to each other.

2. The magnetic element holder according to claim 1, **characterized in that** it is configured as a modular unit.

3. The magnetic element holder according to claim 1 or 2, **characterized in that** the receiving section (2) comprises multiple receiving pockets (2.1, 2.2, 2.3) disposed in an axial row relative to each other and each of them configured to receive one magnetic element (6).

4. The magnetic element holder according to claim 1, **characterized in that** the row sections (8, 9) are interconnected by means of the at least one spring element (10).

5. The magnetic element holder according to any one of the preceding claims, **characterized in that** the holding means for positionally fixed holding of the at least one magnetic element (6) are each configured as a snap-in connector into which the magnetic element (6) can be inserted and locked.

6. The magnetic element holder according to any one of the preceding claims, **characterized in that** the spring element (10) is configured in one piece on the magnetic element holder (1).

7. The magnetic element holder according to any one of the preceding claims, **characterized in that** the spring element (10) has a wave form at least in regions of its cross section, which wave form can be partially elastically compressed and stretched along the wave flow.

8. The magnetic element holder according to any one of the preceding claims, **characterized in that** the spring element (10) substantially extends along the entire edge length of the magnetic element holder (1).

9. The magnetic element holder according to any one of the preceding claims, **characterized by** a tongue (7) disposed on the front face, which can be moved or bent in its position, wherein the tongue (7) can be used to close the adjacent receiving section (2.1).

10. The magnetic element holder according to the preceding claim, **characterized in that** the tongue (7) has an optical indicator (16) for a magnetic field orientation of the at least one magnetic element (6).

11. The magnetic element holder according to any one of the preceding claims, **characterized in that** a magnetic element insertion section (15) is provided by means of which the at least one magnetic element (66) can be inserted into the at least one receiving section (2.1), wherein the magnetic element insertion section (15) has an asymmetric cross section on its front face.

12. A rotor (100) of an electric motor having a plurality of magnetic element holders (1) according to any one of the preceding claims, **characterized in that** the plurality of magnetic element holders (1) are disposed and fastened adjacent to each other in the peripheral direction on the inner wall of the rotor (100).

13. The rotor according to the preceding claim, **characterized in that** the plurality of magnetic element holders (1) are at least partially glued to the inner wall of the rotor (100).

14. The rotor according to the preceding claim, **characterized in that** the plurality of magnetic element holders (1) can be connected into a circular unit in a peripheral direction and inserted as a whole along the inner wall into the rotor (100).

15. The rotor according to any one of claims 12 to 14, **characterized in that** a spring element (10) is disposed between each of the magnetic element holders (1).

## Revendications

1. Dispositif de retenue d'élément magnétique (1) pour un moteur électrique, présentant un support formé d'une structure de cadre qui présente au moins une partie de réception (2) servant à recevoir au moins un élément magnétique (6), et comprenant des moyens de retenue servant à retenir ledit au moins un élément magnétique (6) en position à l'intérieur de ladite au moins une partie de réception (2), le dispositif de retenue d'élément magnétique (1), en cours d'utilisation conforme, étant réalisé pour être fixé à une paroi intérieure d'un rotor du moteur électrique, le dispositif de retenue d'élément magnétique (1) présentant du côté du bord extérieur au moins un élément ressort (10) qui permet de produire une précontrainte par rapport à un deuxième dispositif de retenue d'élément magnétique (1) pouvant être positionné de manière adjacente dans la direction circonférentielle du rotor,
**caractérisé en ce que** le dispositif de retenue d'élément magnétique (1) présente dans la direction circonférentielle du rotor plusieurs parties de rangées parallèles (8, 9) comprenant respectivement au moins une partie de réception (2) pour respectivement au moins un élément magnétique (6), les parties de rangées (8, 9) étant espacées les unes par rapport aux autres dans la direction circonférentielle du rotor, et dans lequel, entre les parties de rangées (8, 9), respectivement une charnière (5) est prévue par laquelle les parties de rangées (8, 9) peuvent être inclinées de manière mobile les unes par rapport aux autres.

2. Dispositif de retenue d'élément magnétique selon la revendication 1, **caractérisé en ce qu'**il est réalisé sous la forme d'une unité modulaire.

3. Dispositif de retenue d'élément magnétique selon la revendication 1 ou 2, **caractérisé en ce que** la partie de réception (2) présente plusieurs poches de réception (2.1, 2.2, 2.3) disposées les unes par rapport aux autres dans une rangée axiale et qui sont réalisées pour recevoir respectivement un élément magnétique (6).

4. Dispositif de retenue d'élément magnétique selon la revendication 1, **caractérisé en ce que** les parties de rangées (8, 9) sont reliées les unes aux autres respectivement par l'intermédiaire du au moins un élément ressort (10).

5. Dispositif de retenue d'élément magnétique selon l'une quelconque des revendications précédentes, **caractérisé en ce que** les moyens de retenue servant à retenir ledit au moins un élément magnétique (6) en position sont réalisés respectivement sous forme de dispositifs d'encliquetage dans lesquels l'élément magnétique (6) peut être inséré et bloqué.

6. Dispositif de retenue d'élément magnétique selon l'une quelconque des revendications précédentes, **caractérisé en ce que** l'élément ressort (10) est réalisé d'un seul tenant sur le dispositif de retenue d'élément magnétique (1).

7. Dispositif de retenue d'élément magnétique selon l'une quelconque des revendications précédentes, **caractérisé en ce que** l'élément ressort (10) présente en section transversale au moins par endroits une forme ondulée qui peut être comprimée et étirée de manière partiellement élastique au moins le long de son ondulation.

8. Dispositif de retenue d'élément magnétique selon l'une quelconque des revendications précédentes, **caractérisé en ce que** l'élément ressort (10) s'étend substantiellement sur toute la longueur de côté marginal du dispositif de retenue d'élément magnétique (1).

9. Dispositif de retenue d'élément magnétique selon l'une quelconque des revendications précédentes, **caractérisé par** une languette (7) disposée sur la face frontale et qui peut être déplacée ou pliée au niveau de sa position, la languette (7) permettant de fermer ladite au moins une partie de réception (2.1).

10. Dispositif de retenue d'élément magnétique selon la revendication précédente, **caractérisé en ce que** la languette (7) présente un indicateur optique (16) d'une orientation de champ magnétique du au moins un élément magnétique (6).

11. Dispositif de retenue d'élément magnétique selon l'une quelconque des revendications précédentes, **caractérisé en ce qu'**une partie d'insertion d'élément magnétique (15) est prévue par laquelle ledit au moins un élément magnétique (66) peut être introduit dans ladite au moins une partie de réception (2.1), la partie d'insertion d'élément magnétique (15) présentant une section transversale asymétrique sur la face frontale.

12. Rotor (100) d'un moteur électrique, comprenant une pluralité de dispositifs de retenue d'élément magnétique (1) selon l'une quelconque des revendications précédentes, **caractérisé en ce que** la pluralité des dispositifs de retenue d'élément magnétique (1) est disposée dans la direction circonférentielle de manière mutuellement adjacente sur la paroi intérieure du rotor (100) et **en ce qu'**ils sont fixés les uns aux autres.

13. Rotor selon la revendication précédente, **caractérisé en ce que** la pluralité des dispositifs de retenue d'élément magnétique (1) est collée au moins par endroits sur la paroi intérieure du rotor (100).

14. Rotor selon la revendication précédente, **caractérisé en ce que** la pluralité des dispositifs de retenue d'élément magnétique (1) peut être reliée dans une direction circonférentielle en une unité circulaire et peut être insérée dans son ensemble le long de la paroi intérieure dans le rotor (100).

15. Rotor selon l'une quelconque des revendications 12 à 14, **caractérisé en ce que** respectivement un élément ressort (10) est disposé entre chacun des dispositifs de retenue d'élément magnétique (1).
